# FASCICULE DE BREVET EUROPEEN

(11) **EP 0 820 505 B1**
(45) Date de publication et mention de la délivrance du brevet: **21.02.2001**
(21) Numéro de dépôt: 95941042.4
(22) Date de dépôt: 23.11.1995
(51) Int. Cl.: C12H 1/04, B01D 37/02, B01D 39/04, B01D 39/06

(54) **ADJUVANT DE FILTRATION AMELIORE UTILISE EN ALLUVIONNAGE**
FILTERHILFSMITTEL FÜR ANSCHWEMM-FILTRATION
FILTER AID FOR USE IN ALLUVIATION

(30) Priorité: 06.12.1994 EP 94870190
(43) Date de publication de la demande: 28.01.1998
(73) Titulaire: KRONTEC S.A., L-1012 Luxembourg (LU); INTERBREW SOCIETE ANONYME, B-1000 Bruxelles (BE)
(72) Inventeur: BROCHETON, Sophie, B-3000 Leuven (BE)
(74) Mandataire: Van Malderen, Joelle
(86) Numéro de dépôt international: EP9504690
(87) Numéro de publication internationale: WO9617923

(56) Documents cités:
- EP-A- 0 483 099
- WO-A-92/11085
- US-A- 4 326 964
- US-A- 4 344 846
- US-A- 5 022 897
- US-B- 302 271
- Catalogue par Malvern Intruments , Orsay, France, "Ultrasizer- granulométre par ultrasons" pages 3-11
- T. Allen: "Particle Size Measurement", 1975, CHAPMAN AND HALL, LONDON, 2e édition, pages 74-85
- Groupe Français de Génie des procédés: "Procédé de broyage", 1996-45, LAVOISIER TECHNIQUE ET DOCUMENTATION, PARIS, Vol.10, pages 111-116
- L.S. Varosky: "Solid liquid separation", 1981, BUTTERWORTH, LONDON, 2e édition, pages 265-293
- Lowell and Shields: "Powder Surface Area and Porosity", 1991, CHAPMAN AND HALL, LONDON, 3e édition, pages 14-39

## Description

### Objet de l'invention.

La présente invention concerne un adjuvant de filtration présentant des propriétés améliorées qui est utilisé en alluvionnage.

La présente invention s'étend à l'utilisation de cet adjuvant pour la filtration de tout liquide, notamment de bière, de moûts, de vin ou autres boissons.

### Résumé de l'état de la technique

Les adjuvants de filtration sont des substances divisées qui, employées dans les séparations solide-liquide par dépôt sur un tamis ou support, soit seules, soit en mélange avec les particules à retenir, assurent ou améliorent par une action principalement mécanique, l'efficacité de la séparation.

Cette efficacité peut se rapporter soit au niveau qualitatif du filtrat obtenu, par exemple de sa pureté ou de sa stérilité soit au niveau quantitatif par l'augmentation du débit de filtrat.

Les principaux adjuvants utilisés sont:
- les diatomées issues de la calcination des diatomites, fossiles d'algues faisant partie de la famille du plancton et généralement appelées kieselguhr;
- les perlites provenant d'une roche volcanique, la rhyolite. Cette roche concassée, broyée, est expansée plus de 20 fois dans un four de calcination;
- l'amidon sous forme par exemple de fécule de pomme de terre;
- les cendres volantes;
- la cellulose;
- les matières synthétiques telles des fibres de polymères, des billes de verre ou de plastique, ...

Ces adjuvants forment, durant la filtration, un milieu poreux qui capte les impuretés à éliminer et facilite l'écoulement de la phase liquide.

Il est connu que ces adjuvants peuvent s'utiliser soit en précouche, soit en alluvionnage.

En précouche, l'adjuvant est déposé sur le média filtrant préalablement à la filtration de la suspension.

En alluvionnage, l'adjuvant est mélangé à la suspension, préalablement à la filtration, en général grâce à une pompe doseuse. Cette suspension forme un gâteau mixte composé d'adjuvant et d'impuretés. Il est très fréquent de filtrer une suspension avec alluvionnage sur une précouche et ce pour réaliser un filtrat initial bien clarifié, protéger le média filtrant de la migration de fines particules pouvant le colmater et favoriser le débâtissage et le nettoyage du matériel filtrant.

Un secteur d'application des adjuvants particulièrement intéressant est celui de la brasserie.

La demande de brevet européen EP-A-0483099 a décrit un adjuvant de filtration destiné plus particulièrement à être utilisé dans la technique d'alluvionnage dans le domaine brassicole. Cet adjuvant est constitué de billes sphériques de granulométrie comprise entre 5µm et 50 µm avec un diamètre moyen proche de 20 µm.

Ces adjuvants sont de préférence utilisés sous forme de gâteaux dont la porosité est comprise entre 0,3 et 0,5.

Ces billes sphériques sont des billes incompressibles résistant à l'abrasion et aux agents de régénération, peu sensibles aux effets de la température et de qualité alimentaire. Elles sont habituellement réalisées en verre ou en matière plastique pleine ou creuse.

Le document US-A-4326964 décrit un procédé de filtration sur "lit épais" (deep bed). Selon ce procédé, le liquide chargé d'impuretés percole sur un lit filtrant le colmatant de ce fait progressivement. Pour accroître la durée du cycle et limiter le colmatage du filtre en surface, il est proposé d'avoir un lit formé de couches de granulométries différentes dans lequel les particules les plus grandes se trouvent au sommet du lit et arrêtent les impuretés les plus volumineuses et les particules les plus fines se situent dans le fond du filtre en vue de piéger les impuretés les plus petites. Lorsque le lit est colmaté, il est prévu d'effectuer un nettoyage qui se réalise par un lavage à contre courant à un débit tel qu'un phénomène de fluidisation apparaît. Cette action provoque un mélange entre les différentes couches de granulométries différentes. Pour empêcher cette homogénéisation des couches de granulométries différentes, il est proposé d'utiliser des matériaux dont les masses spécifiques sont choisies de manière adéquate pour provoquer la ségrégation. En particulier, l'addition de billes en silice creuses dans du ciment est un moyen proposé pour atteindre cet objectif.

### Buts de l'invention.

La présente invention vise à fournir un adjuvant de filtration destiné à être utilisé en techniques d'alluvionnage et qui présente un comportement amélioré par rapport à ceux décrits dans l'état de la technique et plus particulièrement à celui décrit dans le document EP-A-483099.

Cet adjuvant doit particulièrement convenir à une utilisation en brasserie, et plus particulièrement pour la technique de l'alluvionnage destinée à la clarification de la bière.

### Principaux éléments caractéristiques de la présente invention.

La présente invention se rapporte essentiellement à un adjuvant destiné à être utilisé en alluvionnage, qui est essentiellement constitué de particules angulaires, indéformables sous l'effet de la pression et présentant un facteur de forme, défini comme étant le rapport entre la plus petite dimension et la plus grande dimension, compris entre 0,60 et 0,85, et de préférence proche de 0,7 en moyenne.

De préférence, la distribution granulométrique de ces particules est caractérisée par un diamètre moyen (mesuré au Malvern) compris entre 30 et 40 µm, et par le fait que 70% des particules doivent présenter un diamètre compris entre 15 et 50 µm.

De préférence, la surface spécifique des particules constituant l'adjuvant (mesurée selon la méthode BET) corrigée par la valeur de la masse spécifique de l'adjuvant doit être inférieure à 10⁶ m²/m³. Ceci signifie également que les particules doivent présenter une porosité interne faible, de manière à éviter une adsorption trop importante.

De préférence, ces particules sont utilisées sous forme d'un milieu granulaire (gâteau) dont la porosité est comprise entre 0,5 et 0,7 et dont la perméabilité (déterminée à partir de la mesure de la résistance spécifique) est voisine de 1,5 Darcy.

La masse spécifique de l'adjuvant ne doit pas être supérieure de 25 % à celle de la suspension à filtrer afin d'éviter tout phénomène de décantation et de ségrégation.

L'adjuvant selon la présente invention est destiné à être utilisé selon les techniques d'alluvionnage, plus particulièrement dans le domaine de la brasserie.

Il est bien entendu que les techniques dites mixtes, qui utilisent à la fois une suspension avec alluvionnage sur une précouche, sont également envisageables.

### Description d'un mode d'exécution préféré de l'invention.

On tentera de mettre en évidence les propriétés remarquables obtenues en utilisant un adjuvant selon la présente invention en comparant avec des adjuvants dits classiques (diatomées) et un adjuvant tel que décrit dans le document EP-A-0483099.

Les adjuvants dits classiques sont des diatomées qui sont utilisées soit en alluvionnage telles que des kieselguhrs roses obtenus par simple calcination, soit en précouches telles que des kieselguhrs blancs obtenus par calcination et par frittage. A titre d'exemple, citons le CBL comme kieselguhrs roses et le DIF BO comme kieselguhrs blancs, ces deux adjuvants étant commercialisés par la société CECA.

D'autre part, un adjuvant tel que décrit dans la demande de brevet EP-A-0483099 se présentant sous la forme de billes sphériques a également été utilisé afin d'effectuer un test comparatif avec l'adjuvant selon la présente invention.

Le tableau 1 reprend les principales grandeurs qui permettent de caractériser les différents adjuvants de filtration. Ces adjuvants sont essentiellement caractérisés par :
- leur surface spécifique (S₀) mesurée selon la méthode BET en corrigeant la valeur par la masse spécifique de l'adjuvant et mesurée en m²/m³;
- leur diamètre moyen (d_{moy}) ainsi que les diamètres à 10% de passants (d₁₀) et à 80% de passants (d₈₀) déterminés à partir des analyses granulométriques réalisées au Malvern (au rayon laser).

De même, les milieux granulaires vierges (sans levure) constituant le gâteau sont caractérisés par :
- leur porosité ε0 calculée à partir de la masse spécifique apparente;
- leur perméabilité B₀ déterminée à partir de la mesure de la résistance spécifique;
- leur masse spécifique réelle (ρₐ) déterminée par pycnomètrie.

Les essais comparatifs consistent à filtrer à pression constante une suspension concentrée d'adjuvant et de levures dont le rapport des deux constituants demeure égal à celui d'une bière contenant 10⁶ levures par ml additionnée de 100 g / hl d'adjuvant. Cette concentration en levures peut être considérée comme étant maximale pour une bière centrifugée.

Les essais discontinus en laboratoire ont été réalisés sur un échantillon de 2 litres de bière contenant 10¹¹ levures additionnées de 100 g d'adjuvant. La filtration est effectuée sous une pression de 2 bar. Les gâteaux déposés sont caractérisés par :
- leur résistance spécifique, qui est la résistance à l'avancement du liquide par kilo de matière solide de la suspension (mesurée en m/kg);
- leur masse spécifique apparente ρ_{GS} (en kg/m³).

Le tableau 2 représente essentiellement les données de résistance spécifique et de masse spécifique des milieux mixtes (adjuvant + impuretés) pour les quatre adjuvants précités.

D'après les données reprises au tableau 2, on constate que l'adjuvant selon la présente invention donne lieu, en présence de levures, à des gâteaux dont la résistance spécifique est très inférieure à celles obtenues pour les adjuvants dits classiques (kieselguhrs) et pour l'adjuvant décrit dans le document EP-0483099. La masse spécifique apparente du gâteau formé avec le nouvel adjuvant est supérieure à celle mesurée pour les gâteaux formés avec les kieselguhrs, mais inférieure à celle relative au gâteau formé par l'adjuvant décrit dans le document EP-0483099. Ceci signifie que la montée en pression dans le filtre et la croissance du gâteau sont nettement plus faibles avec l'adjuvant selon la présente invention qu'avec les adjuvants traditionnels. Ces avantages sont considérables et permettent d'accroître les temps de filtration avant que la pression maximale admissible sur le filtre ne soit atteinte ou que les chambres de filtration ne soient remplies de gâteau, ce qui maximalisera la durée utile de production du filtre industriel.

De plus, la forme et la distribution granulométrique des particules d'adjuvant selon la présente invention, permettent de réaliser un gâteau de structure homogène, ce qui a pour avantage d'améliorer l'efficacité des opérations de déplacement d'un fluide par un autre. Ceci est un avantage important dans le cas de la régénération de l'adjuvant.

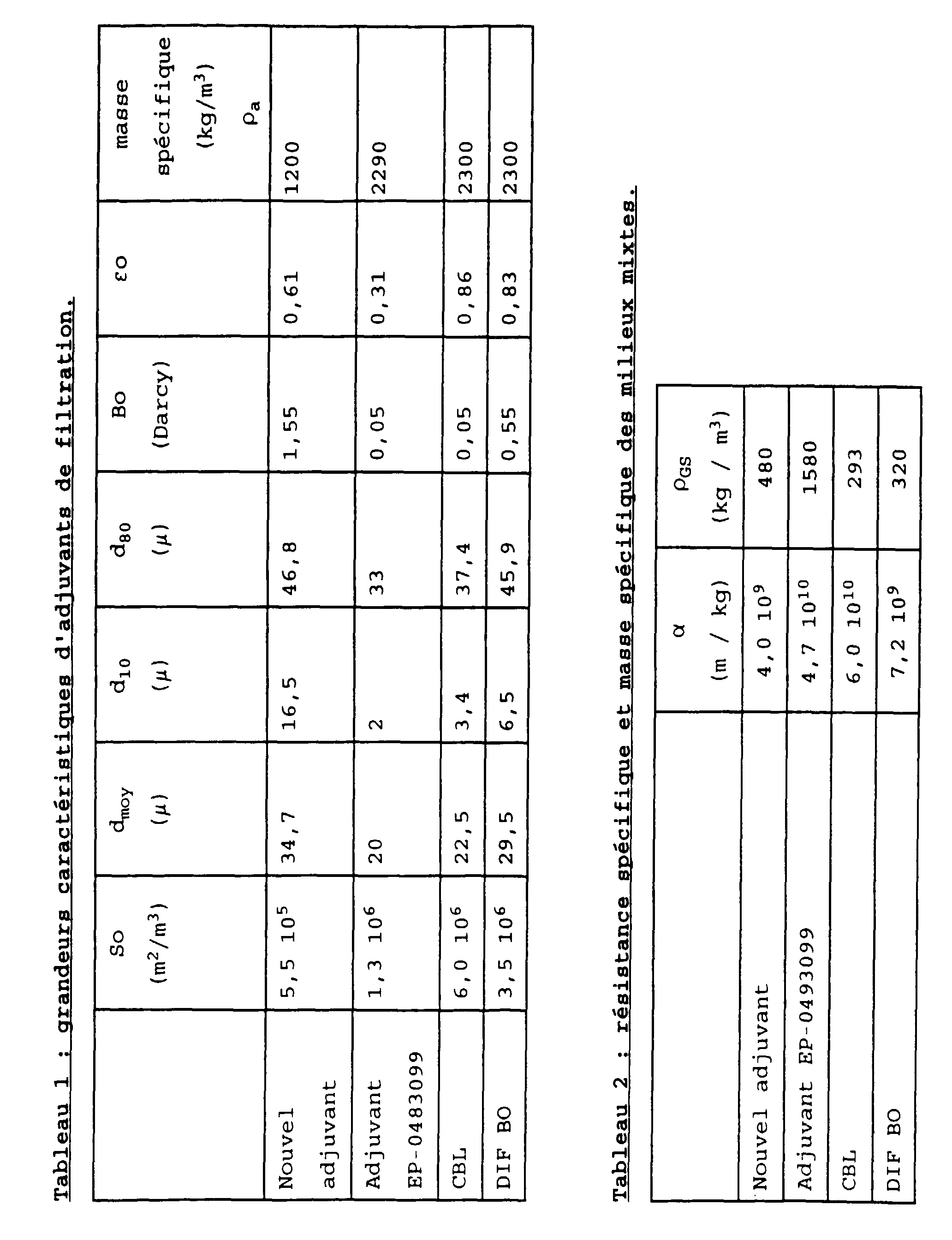

## Revendications

1. Adjuvant de filtration destiné à être utilisé en alluvionnage, caractérisé en ce qu'il est constitué de particules angulaires et indéformables sous l'effet de la pression, dont le facteur de forme (mesuré à l'analyseur d'images), défini par le rapport entre la plus petite et la plus grande dimension, est compris en moyenne entre 0,60 et 0,85, et de préférence proche de 0,7, la forme des particules étant homogène et isotrope.

2. Adjuvant selon la revendication 1, caractérisé en ce que la distribution granulométrique des particules est définie par un diamètre moyen compris entre 30 et 40 µm (mesuré au Malvern) et par le fait que 70 % des particules présentent un diamètre compris entre 15 et 50 µm.

3. Adjuvant selon l'une quelconque des revendications précédentes, caractérisé en ce que la surface spécifique des particules (mesurée selon la méthode BET) en corrigeant la valeur par la masse spécifique de l'adjuvant doit être inférieure à 10⁶ m²/m³.

4. Adjuvant selon l'une quelconque des revendications précédentes, caractérisé en ce que les particules doivent former un milieu granulaire ou gâteau présentant une porosité comprise entre 0,5 et 0,7 et une perméabilité supérieure à 0,5 Darcy.

5. Adjuvant selon l'une quelconque des revendications précédentes, caractérisé en ce que la masse spécifique n'excède pas de plus de 25% celle de la suspension à filtrer.

6. Adjuvant selon l'une quelconque des revendications précédentes, caractérisé en ce qu'il est constitué de particules de verre ou de matière plastique.

7. Utilisation de l'adjuvant de filtration selon l'une quelconque des revendications précédentes, pour la filtration de tout liquide, notamment de boissons telles que la bière, selon le procédé d'alluvionnage, l'adjuvant de filtration étant mélangé à la suspension à filtrer.

8. Utilisation selon la revendication 7, notamment dans le domaine de la brasserie, dans laquelle on forme une précouche d'adjuvant de filtration sur le moyen filtrant avant de procéder à la filtration de la suspension.

## Patentansprüche

1. Filtrationszusatzstoff, der dazu bestimmt ist, bei der Anschwemmung verwendet zu werden, dadurch gekennzeichnet, daß er aus winkligen und unter Druck unverformbaren Partikeln besteht, deren (mit dem Bildanalysator gemessener) Formfaktor, der durch das Verhältnis zwischen der kleinsten und der größten Abmessung definiert ist, im Mittel zwischen 0,60 und 0,85, und vorzugsweise nahe bei 0,7 liegt, wobei die Form der Partikel homogen und isotrop ist.

2. Zusatzstoff gemäß Anspruch 1, dadurch gekennzeichnet, daß die granulometrische Verteilung der Partikel durch einen (mit dem Malvern) gemessenen, mittleren Durchmesser zwischen 30 und 40 µm definiert ist, und daß 70% der Partikel einen Durchmesser zwischen 15 und 50 µm aufweisen.

3. Zusatzstoff gemäß irgendeinem der vorhergehenden Ansprüche, dadurch gekennzeichnet, daß die (nach der BET-Methode gemessene) spezifische Oberfläche der Partikel, bei Korrektur des Wertes mit der spezifischen Masse des Zusatzstoffes, kleiner als 10⁶ m²/m³ sein soll.

4. Zusatzstoff gemäß irgendeinem der vorhergehenden Ansprüche, dadurch gekennzeichnet, daß die Partikel ein körniges Milieu oder einen Kuchen bilden sollen, die eine Porosität zwischen 0,5 und 0,7 und eine Permeabilität über 0,5 Darcy aufweisen.

5. Zusatzstoff gemäß irgendeinem der vorhergehenden Ansprüche, dadurch gekennzeichnet, daß die spezifische Masse die Masse der zu filtrierenden Suspension nicht um mehr als 25% übersteigt.

6. Zusatzstoff gemäß irgendeinem der vorhergehenden Ansprüche, dadurch gekennzeichnet, daß er aus Glas- oder Kunststoffpartikeln besteht.

7. Verwendung des Filtrationszusatzstoffes gemäß irgendeinem der vorhergehenden Ansprüche zur Filtration irgendeiner Flüssigkeit, insbesondere von Getränken, wie Bier, gemäß dem Anschwemmungsverfahren, wobei der Filtrationszusatzstoff der zu filtrierenden Suspension zugemischt wird.

8. Verwendung gemäß Anspruch 7, insbesondere auf dem Gebiet der Brauerei, bei der eine Filtrationszusatzstoff-Vorschicht auf dem Filtermittel gebildet wird, bevor die Filtration der Suspension vorgenommen wird.

## Claims

1. Filter aid intended to be used in alluviation, which consists of angular particles which do not deform under pressure and whose shape factor (measured by the image analyser), defined by the ratio between the smallest and the largest size, is on average between 0.60 and 0.85, and preferably close to 0.7, the shape of the particles being uniform and isotropic.

2. Aid as claimed in claim 1, wherein the particle size distribution of the particles is defined by an average diameter of between 30 and 40 µm (Malvern measurement) and by the fact that 70% of the particles have a diameter of between 15 and 50 µm.

3. Aid as claimed in either of the preceding claims, wherein the specific surface of the particles (measured as claimed in the BET method), by correcting the value by the specific mass of the aid, should be less than 10⁶ m²/m³.

4. Aid as claimed in any one of the preceding claims, wherein the particles should form a granular medium or cake having a porosity of between 0.5 and 0.7 and a permeability of greater than 0.5 Darcy.

5. Aid as claimed in any one of the preceding claims, wherein the specific mass does not exceed that of the suspension to be filtered by more than 25%.

6. Aid as claimed in any one of the preceding claims, wherein it consists of glass or plastic particles.

7. Use of the filter aid as claimed in any one of the preceding claims, for filtering any liquid, in particular drinks like beer, by the alluviation techniques, the filter aid being mixed with the suspension to be filtered.

8. Use as claimed in claim 7, in particular in the field of beermaking, wherein a prelayer of filter aid is placed on the filter medium prior to filtration of the suspension.
